# EUROPEAN PATENT APPLICATION

(11) **EP 2 475 156 A1**
(43) Date of publication of application: **11.07.2012**
(21) Application number: 11290006.3
(22) Date of filing: 07.01.2011
(51) Int. Cl.: H04M 1/2745, G06F 17/24

(54) **Contacts management in a telephone**

(71) Applicant: Alcatel Lucent, 75007 Paris (FR)
(72) Inventor: Darbon, Hérve, 77700 Magny le Hongre (FR); Attoumane, Nadjat, 95370 Montigny les Cormeilles (FR)
(74) Representative: Lück, Stephan

(57) **Abstract**

A telephone 12 comprises: a contacts directory 15 for storing a set of contacts, each contact having associated contact details; an interface 13 for a user to amend contact details stored in the contacts directory; a name checker 14 for checking if contact details being amended by a user are associated with a first contact having a family name that matches that of another existing second contact stored in the contacts directory; and a data processor 16 for automatically amending contact details relating to home information for one of the first contact and the second contact to bring contact details relating to home information into agreement for the first and second contacts.

## Description

### FIELD OF THE INVENTION

The present invention relates to a telephone and more particularly, to the management of contact details in a telephone.

### BACKGROUND

A mobile or fixed telephone includes a directory or a repository in which contacts are stored with accompanying contact details. For example, information such as a person's name, business name, mobile phone number, email address, home phone number, home mail address and so on may be included. Each contact has its own set of information which is independent from that of other contacts. When a user wishes to call or email a person having details stored in their phone directory, say, the user consults the directory to obtain the necessary information or may use the phone to perform a function, the phone accessing the stored information to complete its task.

The user may add new contacts to the directory, and different contacts may have different types of information associated with them that the user wishes to add to the directory.

### BRIEF SUMMARY

According to the invention, a telephone comprises: a contacts directory for storing a set of contacts, each contact having associated contact details; an interface for a user to amend contact details stored in the contacts directory; a name checker for checking if contact details being amended by a user are associated with a first contact having a family name that matches that of another existing second contact stored in the contacts directory; and a data processor for automatically amending contact details relating to home information for one of the first contact and the second contact to bring contact details relating to home information into agreement for the first and second contacts.

The interface may be operative to enable the user to amend data stored in the contacts directory by at least one of: adding new contact details; amending contact details; and deleting contact details.

An embodiment in accordance with the invention allows easy management of contact details. Thus, if a user wants to register a family in a phone, for example a couple with two children who live at the same home, previously, it would have been necessary to enter four contacts independently and enter four times the home number and the home address. The same difficulty existed when it is wished to modify or delete this information as it needed to be changed or deleted four times. In contrast, with the present invention, by associating individuals by family name, when it is desired to add, change or delete certain types of information, the user may offered the opportunity to automatically change those types of information for associated individuals. The home information is that associated with information typically common to a family, such as a home street address and a home fixed telephone number or a general email address used by all members of a family.

In one embodiment, the family name is an exact match. In another embodiment, the family name may be a partial match between the first and second contacts. This may be useful for cultures in which individuals have two surnames that only one of which is the same, for example.

The telephone may be a mobile handset or a fixed telephone.

Where there are a plurality of existing second contacts having a family name that matches that associated with the first contact, in one embodiment, the user is able to select from the plurality the second contact or contacts to be brought into agreement with the contact details of the first contact.

### BRIEF DESCRIPTION OF THE DRAWINGS

Some embodiments of the present invention will now be described by way of example only, and with reference to the accompanying drawings, in which:
Figure 1 is a schematic flowchart illustrating operation of an embodiment;
Figure 2a, 2b, 2c, 2d, 2e, 2f schematically illustrate a phone display;
Figure 3 is a schematic block diagram of an embodiment;
Figure 4 is a schematic flowchart illustrating operation of an embodiment; and
Figure 5 is a schematic flowchart illustrating operation of an embodiment.

### DETAILED DESCRIPTION

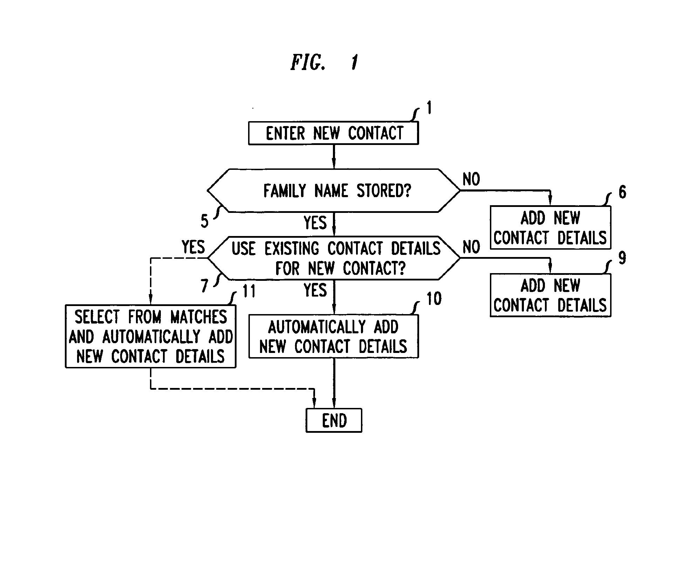

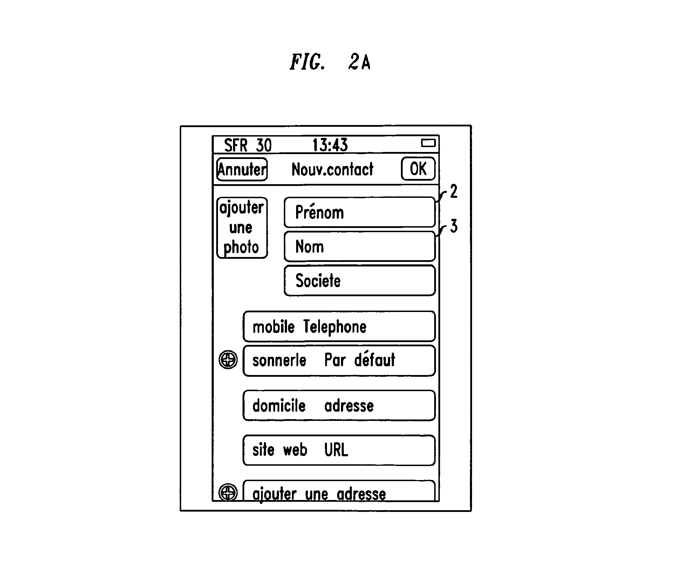

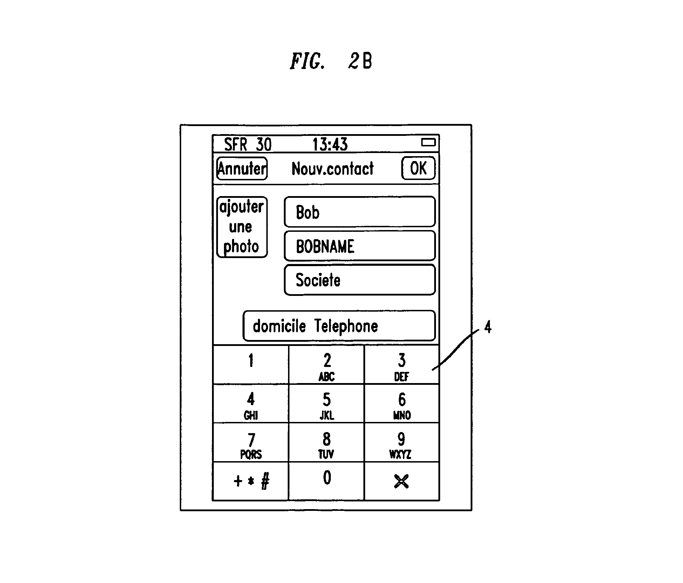

With reference to Figure 1, at step 1, a mobile phone user decides to add a new contact to the contacts directory and intends to add the contact's name, home address and other details. The user calls up the phone display for adding a new contact, as shown in Fig. 2a, the display having a field for a given name 2 and a field for the family name 3. In this example, the name to be entered using the touch display buttons 4 is Bob Bobname, where Bobname is the person's family name, as shown in Fig. 2b.

At step 5, the entered family name is checked by the phone to determine if another contact or contacts having the same family name is already entered in the directory.

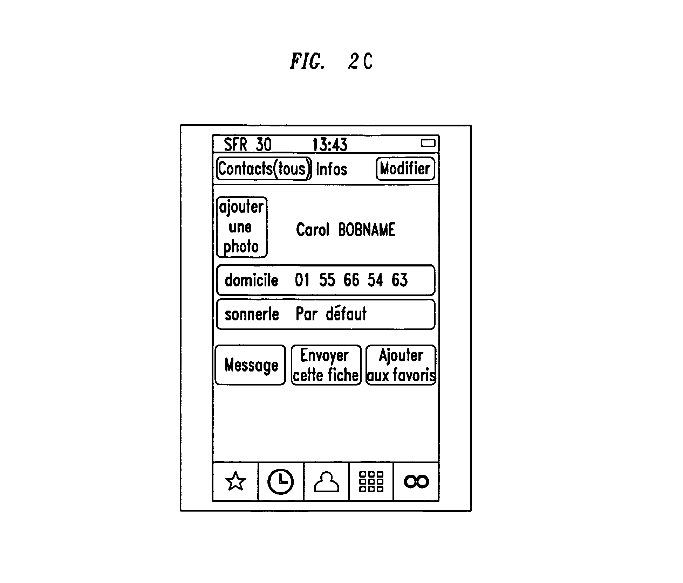

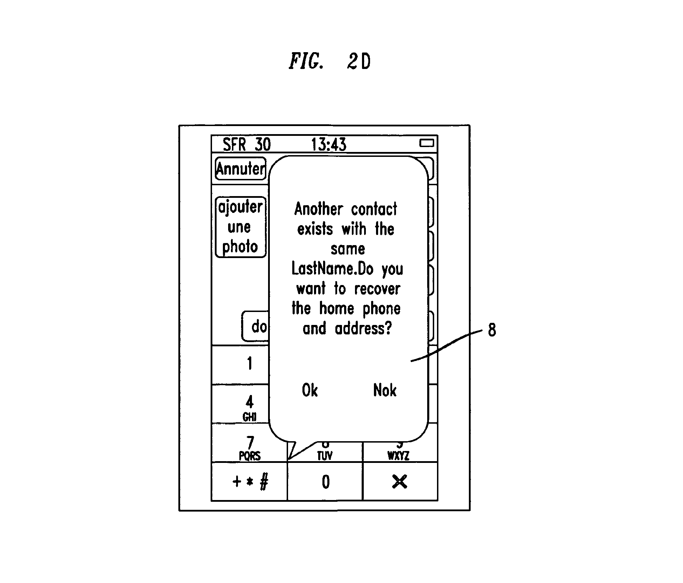

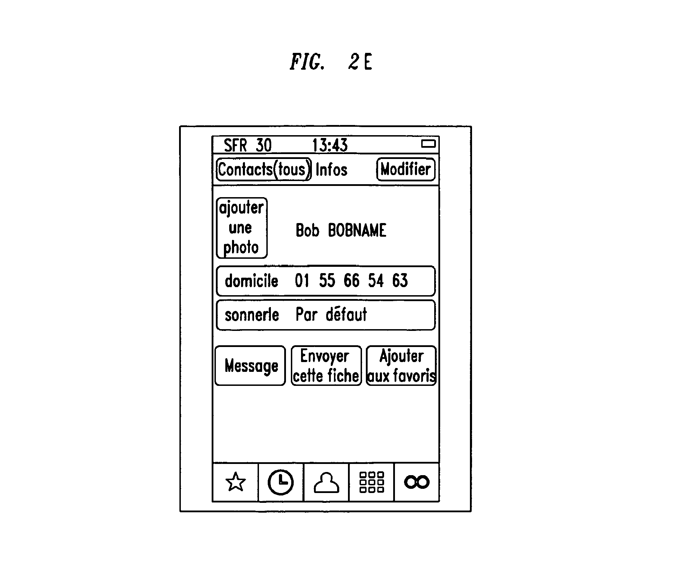

If there is no existing stored contact with the same family name, the user then is prompted to manually enter the required information at step 6. However, in this example, another contact with a matching family name - Carol Bobname - is included already in the directory. Figure 2c shows a phone display with some of the details associated with this existing stored contact. Thus, the check at step 5 gives a positive result. The user is then told at step 7 via a pop up 8, shown in Figure 2d, that there is an existing contact already stored. The user is asked if they want to use the contact details already stored in the directory in connection with the existing contact. If the user decides not use existing details, the user is prompted to enter them manually, if wished, at step 9. If the user does decide to take advantage of the already stored details, the appropriate information from Carol Bobname's information is automatically added to the newly added contact at step 10. Appropriate information will be that which is relevant to the home phone, as illustrated in Figure 2e, and the home address. Information which would be personal to Carol Bobname, such as her own mobile phone number, is not automatically copied into Bob Bobname's contact details.

In another embodiment, instead of the step shown at 10, the user is presented at step 11 with a list of all the existing stored contacts with a matching family name and is invited to choose from which of them details should be copied to be included with the new contact details.

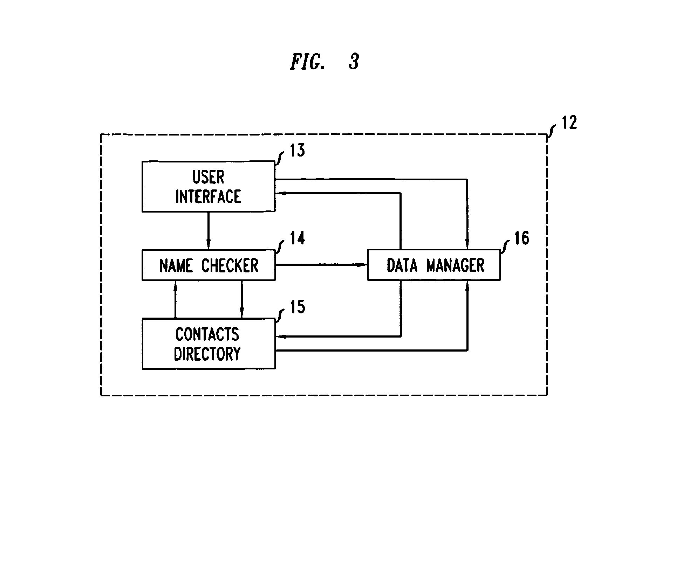

With reference to Figure 3, a mobile phone 12 capable of implementing the method described above includes a user interface 13 by which the user enters a new contact name. The new contact family name is checked by a name checker 14 which compares it with stored contact details held in store 15. The result is communicated to a data manager 16 which handles the acquisition of information and responses from the user and updates information held in the store 15.

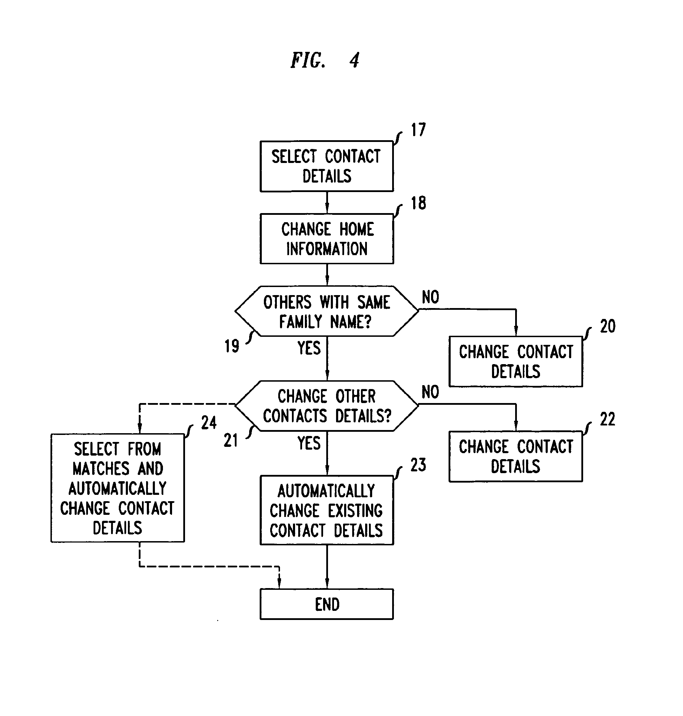

With reference to Figure 4, a user may decide to modify a contact's home number and/or home address. The user selects the contact details screen of the mobile phone at 17 and enters the new home information for the contact at step 18. The phone checks at step 19 to determine if there is(are) other contact(s) in the directory with the same family name as the contact whose details are being changed.

If there are no other contacts with the same family name, the user is prompted to manually make the change at 20 and the process ends.

If there is another contact with the same family name, the user is asked if he wishes to change the other existing contact details also at step 21. This may be done a pop up displayed to the user. The user is given the option of modifying the home number and/or home address of the existing contact(s) with the values entered by the user. The user may decline and the process then stops at step 22. If the user agrees to changing the home phone number and/or home address of the other contact, the existing contact or contacts are updated automatically at 23. Otherwise, he refuses and modifies the other number(s) and/or address(es) manually.

Another embodiment includes an option presented at step 24 for the user to selectively choose which of the matching contacts should have their contact details updated and this is then carried out automatically for the selected contacts.

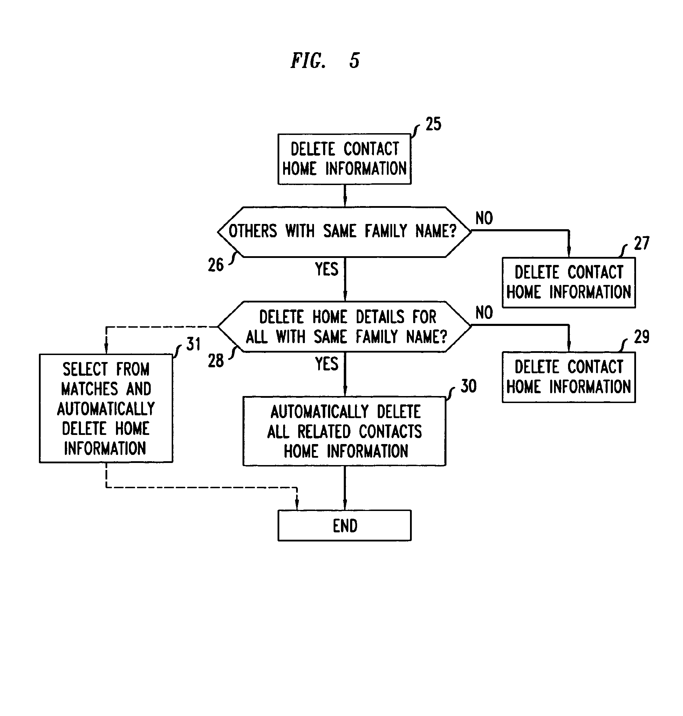

With reference to Figure 5, when a user deletes a contact's home number and/or home address by a command at 25, there is a check at step 26 to determine if there are any other contacts in the phone directory with the same family name as the contact. If it is not the case, the contact's phone number and/or home address is deleted from the directory as usual at step 27. If there are one or more other existing contacts with the same family name, the user is asked if all the existing contact, or contacts, home number and/or home address should be deleted at step 28. This option may be presented by displaying a pop up to the user.

If the user then decides not to change all the existing contact home details, he manually makes any changes at step 29.

If the user agrees to all of the contacts home details being deleted, this is carried out automatically at step 30.

In another embodiment, an option at 31 allows the user to select only some of the contacts with the same family name to also have their home information deleted from the directory.

The functions of the various elements shown in the Figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A telephone comprising: a contacts directory for storing a set of contacts, each contact having associated contact details; an interface for a user to amend contact details stored in the contacts directory; a name checker for checking if contact details being amended by a user are associated with a first contact having a family name that matches that of another existing second contact stored in the contacts directory; and a data processor for automatically amending contact details relating to home information for one of the first contact and the second contact to bring contact details relating to home information into agreement for the first and second contacts.

2. The telephone as claimed in claim 1 wherein the interface is operative to enable the user to amend data stored in the contacts directory by at least one of: adding new contact details; amending contact details; and deleting contact details.

3. The telephone as claimed in claim 1 or 2 and wherein the user controls the automatic amendment by the data processor.

4. The telephone as claimed in claim 3 wherein a pop up is displayed on the user interface for the user to enable the automatic amendment.

5. A telephone as claimed in any preceding claim wherein the family name is an exact match.

6. A telephone as claimed in any preceding claim wherein the telephone is a mobile handset.

7. A telephone as claimed in any preceding claim wherein the home information includes a home street address and/or a home telephone number.

8. A telephone as claimed in any preceding claim wherein, where there are a plurality of existing second contacts having a family name that matches that associated with the first contact, the user is able to select from the plurality the second contact or contacts to be brought into agreement with the contact details of the first contact.
